# EUROPÄISCHE PATENTSCHRIFT

(11) **EP 3 036 060 B1**
(45) Veröffentlichungstag und Bekanntmachung des Hinweises auf die Patenterteilung: **01.12.2021**
(21) Anmeldenummer: 14738465.5
(22) Anmeldetag: 07.07.2014
(51) Int. Cl.: B23K 11/00, B23K 11/11

(54) **VERFAHREN ZUM VERBINDEN VON ZUMINDEST ZWEI BLECHTEILEN ; BLECHTEILVERBINDUNG**
METHOD OF CONNECTING AT LEAST TWO SHEET METAL PARTS ; ASSEMBLY OF SHEET METAL PARTS
PROCÉDÉ D'ASSEMBLAGE D'AU MOINS DEUX PARTIES EN TÔLE ; ASSEMBALGE DE DEUX PARTIES EN TÔLE

(30) Priorität: 23.08.2013 DE 102013216820
(43) Veröffentlichungstag der Anmeldung: 29.06.2016
(73) Patentinhaber: Volkswagen Aktiengesellschaft, 38440 Wolfsburg (DE)
(72) Erfinder: AMEDICK, Jürgen, 31228 Peine (DE); MICHAELIS, Marc, 38442 Wolfsburg (DE); SCHÜBELER, Christian, 38527 Abbesbüttel (DE)
(86) Internationale Anmeldenummer: PCT/EP2014/064484
(87) Internationale Veröffentlichungsnummer: WO 2015/024698

(56) Entgegenhaltungen:
- EP-A1- 2 722 124
- EP-A2- 1 138 430
- WO-A1-03/084694
- DE-A1-102004 003 909
- DE-A1-102008 058 917
- DE-A1-102011 109 815
- US-A1- 2009 294 410

## Beschreibung

Die Erfindung betrifft ein Verfahren zum Verbinden von zumindest zwei Blechteilen nach dem Oberbegriff des Patentanspruches 1 und eine Blechteilverbindung nach dem Patentanspruch 9.

Bei im Automobilbereich verwendeten Leichtbaustrukturen ist der Einsatz von Aluminium-Stahl-Verbindungen bekannt, bei denen zum Beispiel ein Aluminium-Blechteil mit einem Stahl-Blechteil verbunden ist. Zur Verbindung dieser beiden Blechteile kann zunächst ein Stahl-Einprägeelement in das Aluminium-Blechteil eingetrieben werden. Anschließend kann das in dem Aluminium-Blechteil eingetriebene Stahl-Einprägeelement durch Punktschweißen mit dem Stahl-Blechteil verbunden werden.

Aus der DE 10 2009 035 338 A1 ist ein beispielhaftes Verbindungsverfahren bekannt, bei dem das Stahl-Einprägeelement auf ein Aluminium-Blechteil aufsetzbar und mit vorgegebener Einpresskraft durch das Aluminium-Blechteil treibbar ist, wobei ein Stanzbutzen entsteht. Das Stahl-Einprägeelement weist einen ausgeweiteten Nietkopf sowie einen Nietschaft auf. Nach dem Eintreiben ragt das Stahl-Einprägeelement mit seinem Nietschaft um einen vorgegebenen Überstand aus dem Aluminium-Blechteil heraus. Das aus dem Aluminium-Blechteil herausragende Ende des Nietschaftes wird dann gegebenenfalls unter Zwischenlage einer Klebschicht mit dem Stahl-Blechteil punktverschweißt.

In der DE 10 2009 035 338 A1 weist der Nietschaft des Stahl-Einprägeelements einen zylindrischen Grundkörper aus Vollmaterial auf, der an seinem, dem Nietkopf abgewandten Ende eines konusartig zulaufende Spitze aufweist. Eine derart komplexe Geometrie des Stahl-Einprägeelements ist entsprechend aufwendig herstellbar. Zudem muss bei der Zuführung der Einprägeelemente zum Blechteil die Orientierung der Einprägeelemente beachtet werden.

Aus der WO 03/084694 A1 ist ein Durchsetzfügeverfahren bekannt. Aus der DE 10 2011 109 815 A1 ist eine Verbindung zumindest zweier aneinander anliegender Bauteile bekannt. Aus der EP 1 138 430 A2 (Basis für den Oberbegriff der Ansprüche 1 und 9) ist ein Bauteil für ein Fahrzeug bekannt. Aus der DE 10 2008 058 917 A1 ist ein Verfahren zum Fügen von Werkstücken bekannt. Aus der EP 2 722 124 A1 sind ein Verfahren zum Fügen von wenigstens zwei Bauteilen mit einem Widerstandsschweißelement sowie eine Vorrichtung zur Durchführung des Verfahrens und ein hiermit hergestellter Bauteilverbund bekannt.

Aus der DE 10 2004 003 909 A1 sind ein gattungsgemäßes Verfahren zum Verbinden zweier oder mehrerer Bleche oder Profilteile, insbesondere eines Karosseriesegments, sowie ein Karosseriesegment bekannt. Die US 2009/0294410 A1 offenbart ein Verfahren zur Verbindung unterschiedlicher Metalle aus einem Stahlprodukt und einem Leichtmetallprodukt.

Die Aufgabe der Erfindung besteht darin, ein Verfahren zur Verbindung von Blechteilen und eine Blechteilverbindung bereitzustellen, bei dem in einfacher Weise eine einwandfreie Verbindungsfestigkeit gewährleistet ist.

Die Aufgabe ist durch ein Verfahren mit den Merkmalen/Schritten des Patentanspruches 1 und durch ein Blechteilverbindung mit den Merkmalen des Patentanspruches 9 gelöst.

Erfindungsgemäß erfolgt die Befestigung des Einprägeelements an einem ersten Blechteil nicht in einem Nietvorgang, sondern in einem Tiefziehvorgang, bei dem das Einprägeelement in einer Tiefziehrichtung in das Material des ersten Blechteils eingepresst wird. Dabei wird das erste Blechteil tiefgezogen. Gleichzeitig geht auch das Einprägeelement unter plastischer Verformung eine Formschlussverbindung mit dem ersten Blechteil ein. Bei dem ersten Blech handelt es sich vorzugsweise um ein Aluminiumblech. Ebenso sind Gußlegierungen aus Aluminium und/oder Magnesium, Magnesiumbleche und andere duktile sowie elektrisch leitende Werkstoffe möglich. Das erfindungsgemäße Verfahren zum Verbinden von vorzugsweise Aluminium und Stahl findet daher in zwei unabhängig voneinander ausgeführte Prozessschritten statt. Im ersten Prozessschritt wird ein einfach gestaltetes metallisches Hilfsfügeelement (das heißt das Prägeelement) in das erste Blechteil (das heißt aus Aluminiumwerkstoff) eingeprägt/eingepresst/eingedrückt, wobei sich das Prägeelement dahingehend verformt, das zwischen dem Element und dem Aluminiumwerkstoff ein Form- und Kraftschluss erzeugt wird, welcher eine zerstörungsfrei nicht lösbare Verbindung zwischen dem Aluminium und dem Element bildet. Durch Anpassung der dafür verwendeten Werkzeuggeometrien (Stempel- und Matrizengeometrie) kann zudem eine Formung des aus dem Aluminiumwerkstoff herausstehenden Elementbereiches erfolgen, welcher den zweiten, später erfolgenden Prozessschritt zur Verbindungserzeugung zu einer Baugruppe unterstützt.

Im zweiten Prozessschritt wird das Bauteil aus Aluminiumwerkstoff über den aus der Bauteiloberfläche hervorstehenden Elementbereich mit einem Stahlbauteil mittels Standardstandpunktschweißtechnik verschweißt. Es entsteht dabei eine stoffschlüssige Verbindung zwischen Prägeelement und Stahlblech. Weiterhin ist es auch möglich, mehrere Stahllagen auf das Element aufzuschweißen oder mehrere Werkstoffe mittels des Prägeelementes direkt zu fügen, um diese anschließend mit einem oder mehreren Stahlbauteilen zu verschweißen. Durch entsprechende Verformungen des Elementüberstandes kann eine Verbesserung der Schweißbarkeit erreicht werden.

Eine Kombination aus Prägeelementschweißen mit Kleben ist möglich und für viele Verbindungsfälle erforderlich, um die Verbindungseigenschaften zu verbessern. Bei Anwendungen in Kombination mit Klebstoff, insbesondere mit sogenannten hochfesten Strukturklebstoffen dient das Verbinden der Bauteile zueinander mittels Prägeelementschweißen als Fixierverfahren. Die Hauptaufgabe des Fixierverfahrens ist dabei eine Fixierung der Bauteile zueinander bis die Klebstoffaushärtung erfolgt ist, zum Beispiel bei Karosserieverklebungen mit wärmeaushärtenden Klebstoffen im KTL-Durchlaufofen.

Durch das erfindungsgemäße Verfahren ergeben sich die folgenden Vorteile, nämlich die Verwendung eines einfachen Einprägevorgangs, für den auf bestehende Prozesstechnik zurückgegriffen werden kann, die Verwendung einfacher Elementgeometrien, die gegenüber den bekannten Lösungen ein Potential zur Kosteneinsparung bieten (rotationssymmetrische Geometrie, kein Elementkopf, keine Härtung der Elemente erforderlich, gegebenenfalls auch keine Elementbeschichtung, eine vereinfachte Elementzuführung für den Einprägeprozess, welche die Anlagenverfügbarkeit positiv beeinflussen können).

Zudem wird vorteilhaft bei der Elementeinbringung der Fügeteilwerkstoff nicht durchdrungen, woraus sich Vorteile hinsichtlich der Korrosionsfestigkeit, der Optik und der Oberflächenbündigkeit ergeben. Bei der zusätzlichen Verwendung von Klebstoff kann auf eine Elementbeschichtung verzichtet werden, da das Element nach dem Schweißen vollständig von Fügeteilwerkstoff und Klebstoff umgeben ist, wodurch kein korrosionsförderndes Medium eindringen kann (Kosteneinsparung, verbesserter Korrosionsschutz). Außerdem wird beim Einprägen das Element über die Setzwerkzeuge verformt, wodurch eine Elementlänge für unterschiedliche Fügeteildicken genutzt werden können (erforderliche Elementstauchung über Einprägeprozess regelbar). Erfindungsgemäß wird beim Einprägen über eine entsprechende Prägekontur der Prägestempel-Stirnfläche eine aus dem Blechwerkstoff hervorstehende Elementkontur erzeugt, die vorteilhaft für den zweiten Prozessschritt Schweißen ist. Es können darüber hinaus beidseitig bündige Verbindungen erzeugt werden, die für den indirekten Sichtbereich, Grauzone, geeignet sein können.

Die erfindungsgemäße Kombination aus dem Prägeelementschweißen mit Kleben ist möglich und für viele Verbindungsfälle erforderlich, um die Verbindungs- und Baugruppeneigenschaften zu verbessern. Bei Anwendungen in Kombination mit Klebstoff, insbesondere mit sogenannten hochfesten Strukturklebstoffen, dient das Verbinden der Bauteile mittels Prägeelementschweißen als Fixierverfahren. Die Hauptaufgabe des Fixierverfahrens ist dann eine Fixierung der Bauteile zueinander, bis die Klebstoffaushärtung erfolgt ist, zum Beispiel bei Karosserieverklebungen mit wärmeaushärtenden Klebstoffen im KTL-Durchlaufofen.

Das Einprägeelement kann bevorzugt rotationssymmetrisch um eine Längsachse, insbesondere zylindrisch, ausgebildet sein. Zudem kann das Einprägeelement in einer einfachen Ausführung Stirnseiten aufweisen, die identisch ausgebildet sind. Derartige Elementgeometrien sind mittels eines Massenherstellungsprozesses, wie Massivumformen, einfach herstellbar und bieten dabei gegenüber den bekannten Lösungen ein Potential zur Kosteneinsparung. So ist die rotationssymmetrische Geometrie des Einprägeelements ohne einen Elementkopf. Eine solche einfache Elementgeometrie mit ebener Mantelfläche führt zu einer Kostenreduzierung durch vereinfachten Herstellungsprozess, zu einem geringen Elementgewicht und zu einer erleichterten Elementzuführung. Zudem ist keine kostspielige Härtung der Prägeelemente erforderlich, gegebenenfalls auch keine Elementbeschichtung. Die Länge der Prägeelemente können auf unterschiedliche Bauteildicken abgestimmt werden.

Als Werkstoffe können elektrisch leitende, duktile Werkstoffe, vorzugsweise Stahllegierungen verwendet werden. Für weiterführende Anwendungen sind auch AI-Legierungen denkbar.

Wie oben erwähnt ist die Grundform der Prägeelemente rotationssymmetrisch. Die Stirnseiten der Prägeelemente kann plan, ballig, konkav, konvex, spitz sein. Eine aus der Bauteilebene hervorstehende, spitze oder ballige Kontur birgt Vorteile im Schweißprozess mit dem zweiten Bauteil, insbesondere beim Einsatz von Klebstoffen. Die spitze oder ballige Kontur kann bei der Elementherstellung oder durch den Tiefziehvorgang in das Aluminium-Bauteil erzeugt oder verändert werden.

Die Prägeelementoberfläche kann bevorzugt blank sein (Kostenreduzierung durch Entfall der Beschichtung), alternativ jedoch auch beschichtet sein (für erhöhte Korrosionsfestigkeit oder Änderung des Reibbeiwertes der Elementoberfläche). Die Prägeelementoberfläche kann gegebenenfalls auch glatt, rau oder geriffelt sein (Beeinflussung der Reibung beim Einprägen und des Formschlusses mit dem ersten Blechteil). Beispielhaft kann der Elementdurchmesser von vorzugsweise 2mm bis 4mm sein, und die Elementlänge von 1mm bis 6mm, vorzugsweise ≥ Elementdurchmesser sein.

Aus der oben beschriebenen einfachen Prägeelementgeometrie resultiert eine Vereinfachung der Elementzuführung für den Einprägeprozess. Das heißt eine positive Beeinflussung der Anlagenauslegung und -verfügbarkeit. Beim Einprägen wird das Einprägeelement über die Setzwerkzeuge verformt. Dabei ist eine gemeinsame Elementlänge für unterschiedliche Fügeteildicken möglich, da der Elementüberstand aus der Bauteilebene (vorzugsweise 0,2 mm bis 0,5 mm) über die Elementstauchung einstellbar ist, welche wiederum über den Einprägeprozess (Stempelweg) regelbar ist. Ferner kann die Elementlänge auch über die Kontur der Prägematrize beeinflusst werden. Über eine entsprechende Prägekontur der Prägestempel-Stirnfläche ist eine gezielte Formgebung der aus dem Blechwerkstoff hervorstehenden Elementkontur möglich, dies bietet Vorteile für den zweiten Prozessschritt Schweißen. Zudem ist eine einfache Abstimmung der Prägeelementgeometrie (Durchmesser, Länge...), der Prägestempelkontur und der Matrizenkontur auf die Anforderungen aus unterschiedlichen Bauteilwerkstoffen und -dicken möglich.

Der Einprägeprozess kann in unterschiedlichen Varianten ausgeführt werden, die im Folgenden vereinfacht angegeben sind: So kann ein Prägeelement pro Werkzeughub vorgesehen sein. Zudem können die Einprägewerkzeuge (Stempel und Matrize) in einer Systemtechnik mit C-Bügel integriert sein, die sowohl stationär als auch roboterbetrieben sein kann. Beispielhaft kann der Antrieb pneumatisch, pneumo-hydraulisch, elektro-hydraulisch, mechanisch, etc. sein, und zwar mit unterschiedlichen Prägestempelgeschwindigkeiten. Die Matrize kann fest in einem Bauteilbett integriert sein und das Einprägegerät (Stempel und Niederhalter) separat über Roboter zu der jeweiligen Fügestelle geführt werden (je Punkt eine Matrize erforderlich). Es können zudem mehrere Elemente je Werkzeughub vorgesehen sein und/oder mehrere Prägewerkzeuge in Pressen integriert sein.

Bei der Prägeelement-Einbringung wird erfindungsgemäß der Fügeteilwerkstoff nicht durchdrungen und es liegt kein Elementkopf auf der Bauteiloberfläche auf. Dies ist im Hinblick auf eine gesteigerte Korrosionsfestigkeit, eine dichte Verbindung sowie einer reduzierten Kontaktfläche zwischen Element und Bauteilwerkstoffen von Vorteil. Außerdem ist keine zusätzliche Elementabdeckung im Nassbereich erforderlich, da das Prägeelement vollständig von Bauteilwerkstoff umschlossen ist . Weiterhin ergeben sich Vorteile hinsichtlich der Optik (das heißt geeignet für Grauzonen) und Vorteile hinsichtlich der Oberflächenbündigkeit durch geringere Störkontur. Alternativ kann eine beidseitig oberflächenbündige Verbindung das Anbringen von Dichtungen erleichtern. Im Nassbereich kann bei der zusätzlichen Verwendung von Klebstoff auf eine Elementbeschichtung verzichtet werden, da das Element nach dem Schweißen vollständig von Fügeteilwerkstoff und Klebstoff umgeben ist, wodurch kein korrosionsförderndes Medium eindringen kann (Kosteneinsparung, verbesserter Korrosionsschutz). Es können auch beidseitig bündige Verbindungen erzeugt werden, die für den indirekten Sichtbereich, Grauzone, geeignet sein können.

Zudem können mehr als zwei Bauteile miteinander verbunden werden. Beispielhaft können mehrere Bauteile zu einer ersten Baugruppe mittels des Einprägevorganges des Einprägeelementes (analog zum Clinchnieten) verbunden werden. Die erste Baugruppe kann anschließend mit einem oder mehreren weiteren Bauteilen verschweißt werden oder mit einer zuvor gefügten zweiten Baugruppe verschweißt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnung näher erläutert.

Es zeigen:
- Fig. 1: eine Blechteilverbindung aus einem Stahl-Blechteil und einem Aluminium-Blechteil in einer Teilschnittdarstellung;
- Fig. 2 bis 5: jeweils Ansichten, die das Verfahren zur Herstellung der Blechteilverbindung veranschaulichen;
- Fig. 6: eine Anzahl von beispielhaften, unterschiedlichen Prägeelement-Konturen;
- Fig. 7: eine Anzahl von beispielhaften, unterschiedlichen Pressstößel-Konturen; und
- Fig. 8: eine Anzahl von beispielhaften, unterschiedlichen Matrizen-Konturen.

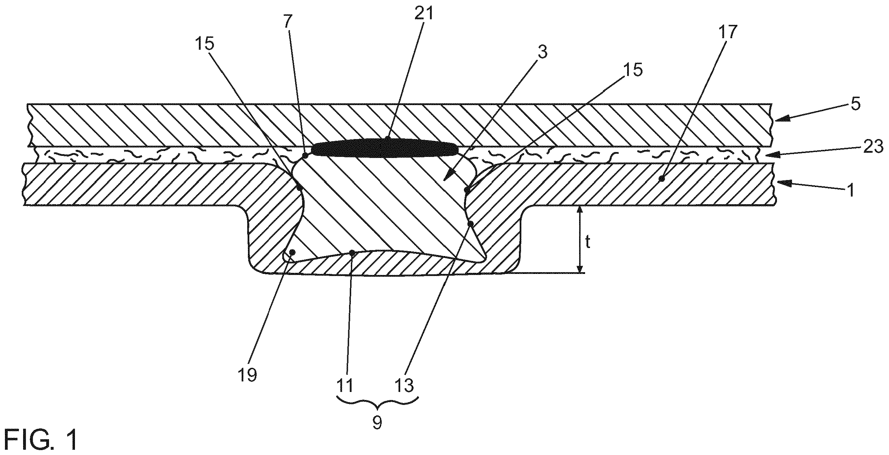

In der Fig. 1 ist eine Blechteilverbindung aus einem Aluminium-Blechteil 1 und einem Stahl-Blechteil 5 gezeigt. Bei der Blechteilverbindung ist das Aluminium-Blechteil 1 mit Hilfe eines Stahl-Einprägeelementes 3 mit einem Stahl-Blechteil 5 verbunden. Die Herstellung der gezeigten Aluminium-Stahl-Verbindung erfolgt zweistufig, und zwar zunächst mit einem Tiefziehvorgang, bei dem das Stahl-Einprägeelement 3 in das Aluminium-Blechteil 1 eingepresst wird, und mit einem nachgeschalteten Widerstandspunktschweißen, bei dem das Stahl-Blechteil 5 mit dem aus dem Aluminium-Blechteil 1 vorragenden Ende 7 des Einprägeelementes 3 verschweißt wird.

Wie aus der Fig. 1 hervorgeht, weist das Aluminium-Blechteil 1 eine tiefgezogene Prägevertiefung 9 auf, die in etwa topfförmig aus der Grundebene des Aluminium-Blechteils 1 nach unten abragt. In der Prägevertiefung 9 ist das Einprägeelement 3 formschlüssig eingepresst. Die Prägevertiefung 9 ist nach unten geschlossen, das heißt ohne Durchtrennung des Aluminium-Materials des Blechteiles 1. Dabei weist die Prägevertiefung 9 einen Tiefziehboden 11 auf, der um eine Tiefe t von der Unterseite des Aluminium-Blechteiles 1 vorragt, sowie eine davon hochgezogenen Seitenwandung 13, die an Übergangskanten 15 in einen unverformten Basisabschnitt 17 des Aluminium-Blechteiles 1 übergeht. Das Einprägeelement 3 ist derart formschlüssig in die Prägevertiefung 9 verpresst, dass das Einprägeelement 3 in eine zwischen der Seitenwandung 13 und dem Tiefziehboden 11 gebildete Hinterschneidung 19 (Fig. 1) eingedrückt ist.

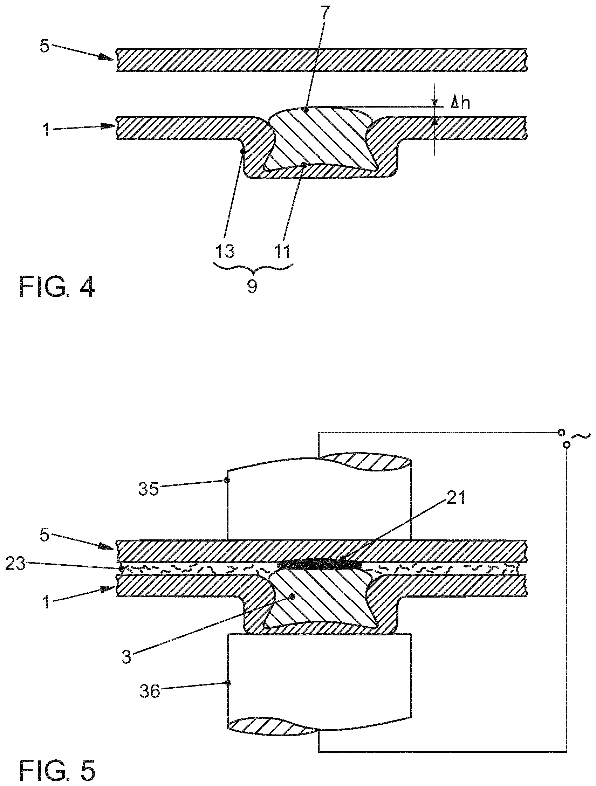

Das von dem Basisabschnitt 17 des Aluminium-Blechteiles 1 um einen Höhenversatz Δh (Fig. 4) vorragende Ende 7 des Einprägeelementes 3 dient als ein Schweißansatz, der über eine angedeutete Schweißlinse 21 mit dem Stahl-Blechteil 5 stoffschlüssig verbunden ist. Vor Durchführung der Verschweißung können die beiden Blechteile 1, 5 an ihren zugewandten Kontaktflächen mit einer zusätzlichen Klebstoffschicht 23 versehen werden.

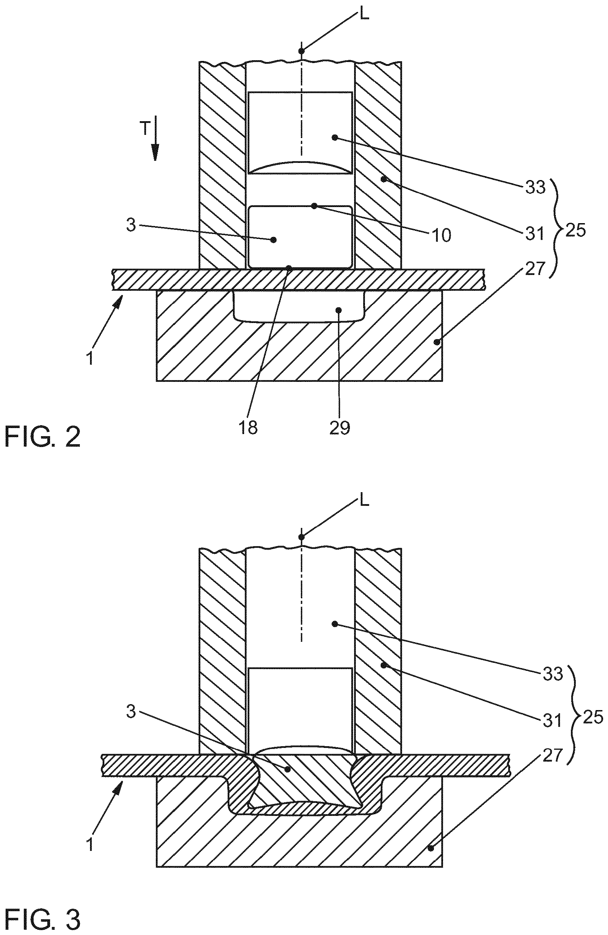

Anhand der Fig. 2 bis 5 ist das Verfahren zur Herstellung der in der Fig. 1 gezeigten Blechteilverbindung veranschaulicht: So wird gemäß der Fig. 2 zunächst das Aluminium-Blechteil 1 und das Einprägeelement 3 in ein Tiefziehwerkzeug 25 eingelegt, bestehend aus einer unteren Matrize 27 mit zugeordneter Vertiefung 29 und einem in einer Führung 31 geführten Pressstößel 33. Die Führung 31 dient gleichermaßen als ein Niederhalter, der das Blechteil 1 auf die Matrize 27 drückt und somit für das Einprägen des Einprägeelements 3 auf dieser fixiert. Des Weiteren kann in ihm eine Elementführung für das Einprägeelement 3 integriert sein. Die Führung des Einprägeelements 3 im Setzwerkzeug kann auch ausschließlich oder zusätzlich durch den Pressstößel 33 erfolgen. Der Pressstößel 33 wird beim Tiefziehvorgang um einen Preßhub nach unten getrieben, wodurch das noch unverformte Einprägeelement 3 in der Tiefziehrichtung T in das Material des Aluminium-Blechteils 1 eingepresst wird. Im in der Fig. 2 gezeigten unverformten Zustand ist das Einprägeelement 3 mit Bezug auf eine senkrechte Mittellängsachse L zylindrisch ausgeführt, und zwar baugleich an den in Längsrichtung gegenüberliegenden Stirnseiten 10.

Der Tiefziehvorgang erfolgt unter gleichzeitiger plastischer Verformung des Einprägeelements 3, wodurch sich eine Formschlussverbindung zwischen dem Einprägeelement 3 und dem Aluminium-Blechteil 1 bildet. Anschließend wird mit einer Widerstandspunktschweißtechnologie das vom Aluminium-Blechteil 1 vorragende Ende 7 des Einprägeelementes 3 in Kontakt mit dem Stahl-Blechteil 5 gebracht und unter Bildung der Schweißlinse 21 mit dem Stahl-Blechteil 5 verschweißt. Die beiden Punktschweißelektroden 35, 36 werden dabei an der vom Einprägeelement 3 abgewandten Seite des Tiefziehbodens 11 der Einprägevertiefung 9 und an der vom Einprägeelement 3 abgewandten Seite des Stahl-Blechteils 5 angesetzt, wie es in der Fig. 5 gezeigt ist.

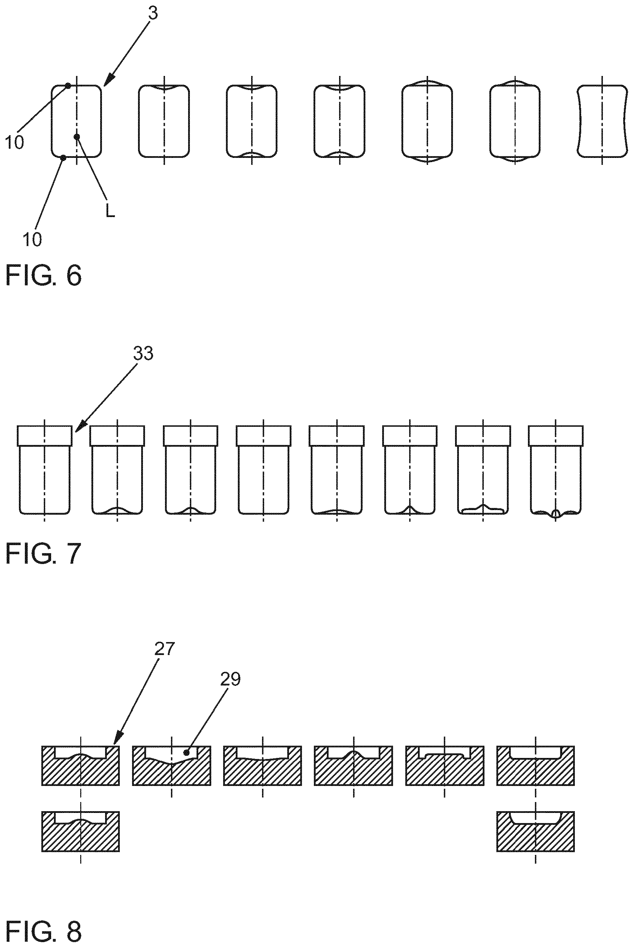

In den Fig. 6 bis 8 sind beispielhaft eine Anzahl von Einprägeelementen 3, Pressstößeln 33 und Matrizen 27 gezeigt, die unterschiedliche Konturen aufweisen. Die Konturen können sowohl den Einprägeprozess als auch das spätere Verschweißen des Elementes begünstigen. Durch die Verwendung von Pressstößeln 33 mit Gesenkformen können im Einprägeprozess die aus den Bauteilen hervorstehenden Prägeelementstirnflächen (gemäß der Erfindung) mit buckel- oder spitzenförmigen Konturen versehen werden oder, wenn diese bereits am Prägeelement 3 vorhanden sind, beim Einprägen aufgenommen werden, um die Kontur beim Prägevorgang zu schützen. Diese stirnseitigen Prägeelementkonturen beeinflussen den Schweißprozess dahingehend, dass sie als Kontaktfläche zum Stahlteil dienen. Bei der Verwendung von Klebstoffen können durch die Kraftbeaufschlagung der Schweißelektroden 35, 36 diese Konturen durch die Klebfläche gedrückt werden und so eine Kontaktierung zum Widerstandsschweißen sicherstellen.

In der Fig. 7 sind einige mögliche Pressstößel-Konturen beispielhaft dargestellt. Die Durchmesser der Pressstößel 33 sind auf die Prägeelementdurchmesser abgestimmt und liegen allgemein im Bereich ± 0,5mm des Elementdurchmessers, vorzugsweise jedoch gleich dem Elementdurchmesser.

Die in der Fig. 8 dargestellten unterschiedlichen Matrizenkonturen können zur Unterstützung der Verbindungsausbildung beim Einprägen Verwendung finden. Die Matrizenkonturen können in ihrer Geometrie an die Besonderheiten des Fügeteilwerkstoffes, in den die Prägeelemente 3 eingeprägt werden, angepasst sein. Ferner kann die Matrizenkontur als starres Gesenk ausgelegt sein oder bewegliche Anteile in der Mantelfläche und/oder im Bodenbereich aufweisen. Zum einen kann dadurch der Werkstofffluss zur Hinterschnittbildung durch Aufspreizen der Prägeelemente 3 unterstützt werden und somit die Tragfähigkeit einer späteren Verbindung verbessern. Zum anderen kann durch die Matrizenkontur der aus der Blechebene des Fügeteiles hervorstehende Werkstoff dahingehend ausgebildet werden, dass dieser für den nachfolgenden Schweißprozess technisch von Vorteil ist und/oder nach der Verbindungserzeugung optische und/oder technische Vorteile bietet. Diese Vorteile können in der Kontaktierung zwischen Blechwerkstoff 1, 5 und Schweißelektrode 35, 36 liegen, zur Lokalisierung der Fügestelle genutzt werden (zum Beispiel beim Teachen von Schweißrobotern, beim Schweißen mit handgeführten Schweißanlagen, beim Anfahren mittels optischer Systeme) oder auch die Störkonturen auf der Blechoberfläche reduzieren oder die Verbindung optisch hervorheben. Des Weiteren können durch die Matrizengestaltung Vorteile bei der Entformung des Blechs 1 aus der Matrize 27 entstehen. Zur Unterstützung der Entformung kann auch ein Abstreifer an oder um die Matrize 27 herum angeordnet sein. Von den in der Fig. 8 gezeigten Matrizenkonturen sind Kombinationen möglich, um, je nach Fügeteilwerkstoffeigenschaften (zum Beispiel Festigkeit, Dicke, Duktilität) und Fügeelementeigenschaften (zum Beispiel Geometrie, Festigkeit, Duktilität), die Geometrie auf die Fügeaufgabe und Anwendung abzustimmen.

## Patentansprüche

1. Verfahren zum Verbinden von zumindest zwei Blechteilen (1, 5), bei dem ein Einprägeelement (3) am ersten Blechteil (1) befestigt wird und anschließend das am ersten Blechteil (1) befestigte Einprägeelement (3) mit dem zweiten Blechteil (5) verschweißt wird, < - >
**dadurch gekennzeichnet, dass**
zur Befestigung am ersten Blechteil (1) das Einprägeelement (3) in einem Tiefziehvorgang in einer Tiefziehrichtung (T) in das Material des ersten Blechteils (1) eingepresst wird und unter plastischer Verformung eine Formschlussverbindung mit dem ersten Blechteil (1) eingeht, < wobei das Verschweißen mittels Punktschweißen mit Punktschweißelektroden (35, 36) erfolgt, > und wobei die Befestigung des Einprägeelements (3) am ersten Blechteil (1) in einem Tiefziehwerkzeug (25) erfolgt, das eine Matrize (27) aufweist, in deren Vertiefung (29) das erste Blechteil (1) tiefgezogen wird, und einen Preßstößel (33) aufweist, der das Einprägeelement (3) in das erste Blechteil (1) einpresst, wodurch der Tiefziehvorgang erfolgt, wobei beim Einprägen über eine entsprechende Prägekontur der Prägestempel-Stirnfläche eine aus dem Blechwerkstoff hervorstehende Elementkontur erzeugt wird, und wobei beim Schweißvorgang die Punktschweißelektroden (35, 36) auf der vom Einprägeelement (3) abgewandten Seite des ersten Blechteils (1) und des zweiten Blechteils (5) angesetzt werden.

2. Verfahren nach Anspruch 1, **dadurch gekennzeichnet, dass** der Tiefziehvorgang ohne Durchtrennung des ersten Blechteils (1) erfolgt.

3. Verfahren nach Anspruch 1 oder 2, **dadurch gekennzeichnet, dass** beim Tiefziehvorgang das Einprägeelement (3) unter Bildung einer Prägevertiefung (9) in das Material des ersten Blechteils (1) eingetrieben wird, die an Übergangskanten (15) in die Grundebene des Blechteils (1) übergeht.

4. Verfahren nach Anspruch 3, **dadurch gekennzeichnet, dass** die Prägevertiefung (9) im ersten Blechteil (1) mit einem geschlossenen Boden (11) und einer davon hochgezogenen umlaufenden Seitenwandung (13) gebildet wird.

5. Verfahren nach einem der vorhergehenden Ansprüche, **dadurch gekennzeichnet, dass** der Tiefziehvorgang unter Bildung einer Hinterschneidung (19) zwischen dem Tiefziehboden (11) und der Seitenwandung (13) der Prägevertiefung (9) erfolgt in der das Einprägeelement (3) formschlüssig gehalten wird.

6. Verfahren nach einem der vorhergehenden Ansprüche, **dadurch gekennzeichnet, dass** das vorragende Ende (7) des Einprägeelements (3) mit dem zweiten Blechteil (5) verschweißt wird, und zwar unter Zwischenlage einer Klebschicht (23).

7. Verfahren nach einem der vorhergehenden Ansprüche, **dadurch gekennzeichnet, dass** das Einprägeelement (3) zylindrisch, ausgebildet ist, und/oder dass die in der Längsrichtung einander gegenüberliegenden Stirnseiten (10) des Einprägeelements (3) identisch sind.

8. Verfahren nach einem der vorhergehenden Ansprüche, **dadurch gekennzeichnet, dass** durch die Umformung eine buckelförmige Kontur auf der Stirnseite des Einprägeelements (3) erzeugt wird, und/oder dass durch für ein Punktschweißverfahren vorgesehene Punktschweißelektroden (35, 36) während und/oder unmittelbar nach dem Schweißvorgang eine so hohe Kraft auf die Verbindung einwirkt, dass die Tiefe (t) der Prägevertiefung (9) minimiert wird, um eine flache Verbindung zu erzeugen.

9. Blechteilverbindung, bei der zumindest zwei Blechteile (1, 5) nach einem Verfahren gemäß Patentanspruch 1, miteinander verbunden sind, wobei ein Einprägeelement (3) am ersten Blechteil (1) befestigt ist, und das Einprägeelement (3) durch Punktschweißen mit dem zweiten Blechteil (5) verschweißt ist,
**dadurch gekennzeichnet, dass**
zur Befestigung des Einprägeelements (3) das erste Blechteil (1) eine tiefgezogene Prägevertiefung (9) aufweist, in die das Einprägeelement (3) eingepresst ist, und wobei die Prägevertiefung (9) durch das Einpressen des Einprägeelements (3) erzeugt wird, und dass das Einprägeelement (3) eine aus dem Blechwerkstoff hervorstehende Elementkontur aufweist.

## Claims

1. Method for connecting at least two sheet-metal parts (1, 5), in which an embossing element (3) is attached to the first sheet-metal part (1), and the embossing element (3) attached to the first sheet-metal part (1) is then welded to the second sheet-metal part (5), **characterized in that,** in order to attach the first sheet-metal part (1), the embossing element (3) is pressed into the material of the first sheet-metal part (1) in a deep-drawing process in a deep-drawing direction (T), and a positive connection is established with the first sheet-metal part (1) by plastic deformation, wherein the welding takes place by means of spot welding with spot-welding electrodes (35, 36), and wherein the attachment of the embossing element (3) to the first sheet-metal part (1) takes place in a deep-drawing tool (25), which has a die (27) in the recess (29) of which the first sheet-metal part (1) is deep drawn, and has a pressing tappet (33) which presses the embossing element (3) into the first sheet-metal part (1), whereby the deep-drawing process takes place, wherein, during embossing, an element contour protruding from the sheet-metal material is generated via a corresponding embossing contour of the embossing stamp front face, and wherein, during the welding process, the spot-welding electrodes (35, 36) are attached to the side, facing away from the embossing element (3), of the first sheet-metal part (1) and of the second sheet-metal part (5).

2. Method according to claim 1, **characterized in that** the deep-drawing process takes place without cutting through the first sheet-metal part (1).

3. Method according to claim 1 or 2, **characterized in that,** during the deep-drawing process, the embossing element (3) is driven into the material of the first sheet-metal part (1), forming an embossing recess (9) which merges into the base plane of the sheet-metal part (1) at transition edges (15).

4. Method according to claim 3, **characterized in that** the embossing recess (9) is formed in the first sheet-metal part (1) with a closed base (11) and a circumferential side wall (13) drawn up therefrom.

5. Method according to one of the preceding claims, **characterized in that** the deep-drawing process takes place with the formation of an undercut (19) between the deep-drawing base (11) and the side wall (13) of the embossing recess (9) in which the embossing element (3) is held in a positive-locking manner.

6. Method according to one of the preceding claims, **characterized in that** the protruding end (7) of the embossing element (3) is welded to the second sheet-metal part (5), and, in fact, with the interposition of an adhesive layer (23).

7. Method according to one of the preceding claims, **characterized in that** the embossing element (3) is cylindrical, **and/or that** the front faces (10) of the embossing element (3) opposite each other in the longitudinal direction are identical.

8. Method according to one of the preceding claims, **characterized in that,** by the shaping, an arch-shaped contour is generated on the front face of the embossing element (3), **and/or that** spot-welding electrodes (35, 36) provided for a spot-welding process, during and/or immediately after the welding process, act on the connection with a force high enough that the depth (t) of the embossing recess (9) is minimized in order to produce a flat connection.

9. Sheet-metal part connection, in which at least two sheet-metal parts (1, 5) are connected to one another in accordance with a method according to claim 1, wherein an embossing element (3) is attached to the first sheet-metal part (1), and the embossing element (3) is welded to the second sheet-metal part (5) by spot welding, **characterized in that,** in order to attach the embossing element (3), the first sheet-metal part (1) has a deep-drawn embossing recess (9) into which the embossing element (3) is pressed, and wherein the embossing recess (9) is generated by pressing in the embossing element (3), **and that** the embossing element (3) has an element contour protruding from the sheet-metal material.

## Revendications

1. Procédé d'assemblage d'au moins deux parties en tôle (1, 5), dans lequel un élément d'estampage (3) est fixé à la première partie en tôle (1) puis l'élément d'estampage (3) fixé à la première partie en tôle (1) est soudé avec la deuxième partie en tôle (5), **caractérisé en ce que,** pour la fixation à la première partie en tôle (1), l'élément d'estampage (3) est pressé, lors d'un processus d'emboutissage, dans le matériau de la première partie en tôle (1) dans une direction d'emboutissage (T) et s'engage dans un assemblage par complémentarité de forme avec la première partie en tôle (1) en subissant une déformation plastique, le soudage étant effectué par soudage par points avec des électrodes de soudage par points (35, 36), et la fixation de l'élément d'estampage (3) à la première partie en tôle (1) étant effectuée dans un outil d'emboutissage (25), qui comporte une matrice (28), dans le creux (29) de laquelle la première partie en tôle (1) est emboutie, et qui comporte un coulisseau de presse (33), qui presse l'élément d'estampage (3) dans la première partie en tôle (1), moyennant quoi le processus d'emboutissage est effectué, un contour d'élément dépassant du matériau de la tôle étant généré lors de l'estampage par le biais d'un contour d'estampage correspondant de la surface frontale de l'estampe et les électrodes de soudage par points (35, 36) étant appliquées lors du processus de soudage sur le côté de la première partie en tôle (1) et de la seconde partie en tôle (5) opposé à l'élément d'estampage (3).

2. Procédé selon la revendication 1, **caractérisé en ce que** le processus d'emboutissage est effectué sans sectionner la première partie en tôle (1).

3. Procédé selon la revendication 1 ou 2, **caractérisé en ce que,** lors du processus d'emboutissage, l'élément d'estampage (3) est enfoncé dans le matériau de la première partie en tôle (1) en formant une empreinte d'estampage (9), qui se fond, au niveau de bords de transition (15), dans le plan de base de la partie en tôle (1).

4. Procédé selon la revendication 3, **caractérisé en ce que** l'empreinte d'estampage (9) dans la première partie en tôle (1) est formée avec un fond (11) fermé et une paroi latérale (13) périphérique s'élevant depuis celui-ci.

5. Procédé selon l'une quelconque des revendications précédentes, **caractérisé en ce que** l'emboutissage est effectué en formant une contre-dépouille (19) entre le fond d'emboutissage (11) et la paroi latérale (13) de l'empreinte d'estampage (9), contre-dépouille dans laquelle l'élément d'estampage (3) est maintenu par complémentarité de forme.

6. Procédé selon l'une quelconque des revendications précédentes, **caractérisé en ce que** l'extrémité faisant saillie (7) de l'élément d'estampage (3) est soudée à la deuxième partie en tôle (5), et ce avec intercalation d'une couche adhésive (23).

7. Procédé selon l'une quelconque des revendications précédentes, **caractérisé en ce que** l'élément d'estampage (3) est réalisé cylindrique, **et/ou en ce que** les faces frontales (10) de l'élément d'estampage (3) opposées l'une à l'autre dans la direction longitudinale sont identiques.

8. Procédé selon l'une quelconque des revendications précédentes, **caractérisé en ce que,** par le formage, un contour en forme de bosse est généré sur la face frontale de l'élément d'estampage (3), **et/ou en ce que,** pendant et/ou directement après le processus de soudage, une force d'une grandeur telle que la profondeur (t) de l'empreinte d'estampage (9) est minimisée pour générer un assemblage plat agit sur l'assemblage par le biais d'électrodes de soudage par points (35, 36) prévues pour un procédé de soudage par points.

9. Assemblage de parties en tôle, dans lequel au moins deux parties en tôle (1, 5) sont assemblées l'une avec l'autre d'après un procédé selon la revendication 1, un élément d'estampage (3) étant fixé à la première partie en tôle (1), et l'élément d'estampage (3) étant soudé à la deuxième partie en tôle (5) par soudage par points, **caractérisé en ce que,** pour la fixation de l'élément d'estampage (3), la première partie en tôle (1) présente une empreinte d'estampage (9) emboutie, dans laquelle l'élément d'estampage (3) est pressé et l'empreinte d'estampage (9) étant générée par le pressage de l'élément d'estampage (3) **et en ce que** l'élément d'estampage (3) comporte un contour d'élément dépassant du matériau de la tôle.
